# EUROPEAN PATENT APPLICATION

(11) **EP 4 815 201 A1**
(43) Date of publication of application: **30.09.2026**
(21) Application number: 24902499.3
(22) Date of filing: 19.11.2024
(51) Int. Cl.: H01Q 1/52

(54) **ANTENNA DEVICE AND RADAR**

(30) Priority: 15.12.2023 CN 202311737720
(71) Applicant: Huawei Technologies Co., Ltd., Shenzhen, Guangdong 518129 (CN)
(72) Inventor: GUAN, Yunjie, Shenzhen, Guangdong 518129 (CN); YANG, Xiaopan, Shenzhen, Guangdong 518129 (CN); WANG, Qiyuan, Shenzhen, Guangdong 518129 (CN); HE, Yin, Shenzhen, Guangdong 518129 (CN); HE, Weiyu, Shenzhen, Guangdong 518129 (CN)
(74) Representative: Pfenning, Meinig & Partner mbB
(86) International application number: PCT/CN2024/132905
(87) International publication number: WO 2025/124077

(57) **Abstract**

Provided are an antenna apparatus and a radar. The antenna apparatus includes a decoupling network and at least two antenna elements. Each antenna element includes a radiator and a feeder. One end of the feeder is connected to the radiator to feed a radio frequency signal into the radiator. A preset spacing is provided between feeders of two adjacent antenna elements. The decoupling network is disposed between the feeders of the two adjacent antenna elements and is indirectly coupled to the feeders, so that currents transmitted from the feeders of the two adjacent antenna elements to the decoupling network are opposite in phase. By disposing the decoupling network, the coupling currents generated by the feeders of the two adjacent antenna elements can be guided into the decoupling network, where the two coupling currents from different feeders can cancel each other, thereby achieving decoupling. In addition, the decoupling network can effectively decouple two adjacent antenna elements with spacing less than 0.5 λ, thereby improving the isolation of a high-density array antenna.

## Description

The present invention claims priority to Chinese Patent Application No. 202311737720.1, filed with the China National Intellectual Property Administration on December 15, 2023 and entitled "ANTENNA APPARATUS AND RADAR", which is incorporated herein by reference in its entirety.

### TECHNICAL FIELD

This application relates to the field of communication technologies, and specifically, to an antenna apparatus and a radar.

### BACKGROUND

With the expansion of application scenarios for millimeter-wave radars, such millimeter-wave radars are evolving toward long-range operation, large aperture, and high angular resolution. Currently, in the field of millimeter-wave radars, the layout spacing between millimeter-wave antenna arrays is usually greater than 1.5 times the free-space wavelength, representing a non-high-density array arrangement. In such an arrangement, a plurality of grating lobes exist in the radiation pattern of an array antenna. When a radar encounters a reflection target with a large radar cross section (radar cross section, RCS), ghost target effects may occur, directly affecting overall system performance.

To reduce ghost target effects caused by high-energy grating lobes and side lobes and to achieve high angular resolution, a high-density array arrangement can be considered, in which the spacing between antenna elements is less than 0.5 wavelength ad the quantities of transmit and receive channels are increased. However, using antenna element spacing less than 0.5 wavelength introduces poor isolation, resulting in mutual interference between antenna elements and negatively affecting antenna performance.

### SUMMARY

In view of this, this application provides an antenna apparatus and a radar to address the problem of poor isolation between antennas in existing high-density array arrangements.

According to a first aspect, this application provides an antenna apparatus, including a decoupling network and at least two antenna elements. Each antenna element includes a radiator and a feeder, one end of the feeder is connected to the radiator to feed a radio frequency signal into the radiator, and a preset spacing is provided between feeders of two adjacent antenna elements. The decoupling network is disposed between the feeders of the two adjacent antenna elements. Two ends of the decoupling network are respectively indirectly coupled to the feeders of the two adjacent antenna elements, so that currents transmitted from the feeders of the two adjacent antenna elements to the decoupling network are opposite in phase.

According to the antenna apparatus provided in this application, by disposing the decoupling network between the two adjacent antenna elements, coupling currents generated by the feeders of the two adjacent antenna elements may be guided into the decoupling network, and the two coupling currents from different feeders can cancel each other on the decoupling network, thereby achieving an objective of decoupling. In addition, by disposing the decoupling network, decoupling can be implemented for the two adjacent antenna elements with a spacing less than 0.5 λ, thereby improving isolation of a high-density array antenna.

In a possible design, the decoupling network includes a first coupling branch and a second coupling branch, a first coupling gap is provided between the first coupling branch and one adjacent feeder, and the first coupling branch includes a first coupling port. A second coupling gap is provided between the second coupling branch and the other adjacent feeder, and the second coupling branch includes a second coupling port. The first coupling port is coupled to the second coupling port, and currents between the first coupling port and the second coupling port are opposite in phase. A current on the feeder neighboring the first coupling branch may be coupled to the first coupling branch, and can be transmitted to the first coupling port. A current generated by the feeder neighboring the second coupling branch may be coupled to the second coupling branch, and can be transmitted to the second coupling port. The current on the first coupling port and the current on the second coupling port are in opposite directions. Therefore, when the current on the first coupling port and the current on the second coupling port are coupled to each other, they can cancel each other to implement decoupling.

In a possible design, the feeder includes an input port and an output port, the feeder is connected to a radio frequency front-end through the input port, and the feeder is coupled to the radiator through the output port. The first coupling port is disposed at one end of the first coupling branch adjacent to the input port, and/or the second coupling port is disposed at one end of the second coupling branch adjacent to the input port. The radio frequency signal may be input by the radio frequency front-end to the feeder through the input port of the feeder, and can be fed into the radiator through the output port. When a distance between the two adjacent antenna elements is short, for example, when a distance between the feeders of the two adjacent antenna elements is less than 0.5 λ, if no decoupling network is disposed, a coupled electric field is generated on the feeders. Therefore, the decoupling network may be disposed at a position corresponding to the feeders and can be indirectly coupled to the feeders, to attract coupling currents caused by the feeders to the decoupling network, thereby implementing an effect of decoupling between the feeders. A strong coupled electric field is easily generated at a position near the input port on the feeder, and the coupling currents on the decoupling network are mainly to implement an effect of current cancellation at the first coupling port and the second coupling port. Therefore, the first coupling port and the second coupling port are closer to the input ports of the feeders, so that the coupling currents near the input ports can quickly and efficiently implement decoupling through the decoupling network.

In a possible design, the first coupling gap and/or the second coupling gap are/is greater than or equal to 0.01 mm. For example, the gap may be between 0.05 mm and 0.15 mm. Keeping the gap within the foregoing range can facilitate manufacturing and ensure an effect of coupling between the decoupling network and the feeders, thereby ensuring a decoupling effect.

In a possible design, the decoupling network further includes a first decoupling branch and a second decoupling branch, a first end of the first decoupling branch is electrically connected to the first coupling port, a first end of the second decoupling branch is electrically connected to the second coupling port, and a second end of the first decoupling branch is electrically connected to a second end of the second decoupling branch. The first decoupling branch and the second decoupling branch may implement a direct electrical connection between the first coupling port and the second coupling port, to help implement an effect of mutual cancellation of coupling currents on the decoupling branches. In addition, impedance of the two feeders may be matched by configuring the first decoupling branch and the second decoupling branch, so that a decoupling function of the two feeders satisfies an operating frequency band of the antenna elements.

In a possible design, an electrical length between the first end of the first decoupling branch and the second end of the first decoupling branch is 0.5 Nλ, an electrical length between the first end of the second decoupling branch and the second end of the second decoupling branch is 0.5 Nλ, N is a positive odd number, and λ is a wavelength in a medium. In this way, an effect of current coupling between the decoupling network and the feeders can be achieved, and a current coupling path can be generated on the decoupling network.

In a possible design, one end of the first coupling branch away from the first coupling port further includes a first isolated port, one end of the second coupling branch away from the second coupling port further includes a second isolated port, and the first isolated port is coupled to the second isolated port. Most of currents coupled by the feeders to the decoupling network undergo phase cancellation through the first decoupling branch and the second decoupling branch, and a minor portion of the currents or no current is coupled between the first isolated port and the second isolated port. The first isolated port and the second isolated port may play a function of impedance matching between the decoupling network and the feeders, so that the coupling currents generated by the feeders can be coupled to the decoupling network, thereby implementing the decoupling effect.

In a possible design, the decoupling network further includes an adjustment branch, and two ends of the adjustment branch are electrically connected to the first isolated port and the second isolated port respectively. The adjustment branch may implement a direct electrical connection between the first isolated port and the second isolated port, and impedance adjustment can be implemented by configuring a proper adjustment branch, so that coupling currents generated by the feeders can be coupled to the decoupling network, thereby implementing the decoupling effect.

In a possible design, an electrical length between the first isolated port and the first coupling port is 0.25 Nλ, an electrical length between the second isolated port and the second coupling port is 0.25 Nλ, N is the positive odd number, and λ is the wavelength in the medium. In this way, an effect of current coupling between the decoupling network and the feeders can be achieved, and a current coupling path can be generated on the decoupling network.

In a possible design, the first coupling branch includes a first segment, a second segment, and a third segment, two ends of the second segment are respectively connected to the first segment and the third segment, the first segment and the third segment bend toward one side of the second segment away from the adjacent feeder, one end of the first segment away from the second segment forms the first coupling port, and one end of the third segment away from the second segment forms the first isolated port. The first segment, the second segment, and the third segment may form a C-shaped structure, and the second segment may be longer, to help guide a coupling current generated by the adjacent feeder into the first coupling branch. The first segment protrudes toward one side of the second segment, to help guide the coupling current to the first coupling port to cancel a reverse current at the second coupling port, thereby implementing decoupling. The third segment may cooperate with the second coupling branch to implement impedance matching.

In a possible design, the second coupling branch includes a fourth segment, a fifth segment, and a sixth segment, two ends of the fifth segment are respectively connected to the fourth segment and the sixth segment, the fourth segment and the sixth segment bend toward one side of the fifth segment away from the adjacent feeder, one end of the fourth segment away from the fifth segment forms the second coupling port, and one end of the sixth segment away from the fifth segment forms the second isolated port. The fourth segment, the fifth segment, and the sixth segment may also form a C-shaped structure, and the fifth segment may be longer, to help guide a coupling current generated by the adjacent feeder into the second coupling branch. The fourth segment protrudes toward one side of the fifth segment, to help guide the coupling current into the second coupling port to cancel a reverse current at the first coupling port, thereby implementing decoupling. The sixth segment may cooperate with the third segment to implement impedance matching.

In a possible design, a spacing between the feeders of the two adjacent antenna elements is greater than or equal to 0.4 λ, and λ is a free-space wavelength. Therefore, decoupling can be implemented for both a high-density array antenna and a non-high-density array antenna by disposing the decoupling network, thereby improving isolation.

In a possible design, the decoupling network is integrally formed. To be specific, the first coupling branch, the second coupling branch, the first decoupling branch, the second decoupling branch, and the adjustment branch are all integrally formed in a process of preparing the decoupling network, so that the decoupling network forms an integrated structure, to facilitate manufacturing and avoid that a joint gap is generated at a joint of the branches to affect distribution of currents, thereby ensuring the decoupling effect.

According to a second aspect, this application further provides a radar, including the antenna apparatus provided in the first aspect of this application. The radar including the antenna apparatus also has technical effects similar to those of the antenna apparatus. Details are not described herein.

It should be understood that the foregoing general descriptions and the following detailed descriptions are merely used as an example instead of limiting this application.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of a structure of an antenna apparatus according to an embodiment of this application;
FIG. 2 is a diagram of a structure of an antenna apparatus according to another embodiment of this application;
FIG. 3 is a partial view of an antenna apparatus according to an embodiment of this application;
FIG. 4 is a partial view of an antenna apparatus according to another embodiment of this application;
FIG. 5 is a diagram of electric field distribution of an antenna apparatus when no decoupling network is disposed according to this application;
FIG. 6 is a diagram of electric field distribution of an antenna apparatus when a decoupling network is disposed according to this application;
FIG. 7 is a diagram of comparison of S11 simulation curves of an antenna apparatus before and after a decoupling network is disposed according to an embodiment of this application;
FIG. 8 is a diagram of comparison of horizontal plane patterns of an antenna apparatus before and after a decoupling network is disposed according to an embodiment of this application;
FIG. 9 is a diagram of comparison of vertical plane patterns of an antenna apparatus before and after a decoupling network is disposed according to an embodiment of this application;
FIG. 10 is a diagram of comparison of gain curves of an antenna apparatus before and after a decoupling network is disposed according to an embodiment of this application;
FIG. 11 is a diagram of comparison of isolation simulation curves of an antenna apparatus before and after a decoupling network is disposed according to an embodiment of this application;
FIG. 12A and FIG. 12B are diagrams of comparison of S11 simulation curves of an antenna apparatus before and after a decoupling network is disposed according to another embodiment of this application;
FIG. 13 is a diagram of comparison of horizontal plane patterns of an antenna apparatus before and after a decoupling network is disposed according to another embodiment of this application;
FIG. 14 is a diagram of comparison of vertical plane patterns of an antenna apparatus before and after a decoupling network is disposed according to another embodiment of this application;
FIG. 15A and FIG. 15B are diagrams of comparison of isolation simulation curves of an antenna apparatus before and after a decoupling network is disposed according to another embodiment of this application;
FIG. 16 is a diagram of a structure of a first coupling branch according to an embodiment of this application; and
FIG. 17 is a diagram of a structure of a second coupling branch according to an embodiment of this application.

### Reference numerals:

1: antenna element;
11: radiator;
12: feeder;
121: input port;
122: output port;
1A: first antenna element;
1A1: first feeder;
1B: second antenna element;
1B1: second feeder;
2: decoupling network;
21: first coupling branch;
211: first segment;
211A: first coupling port;
212: second segment;
213: third segment;
213A: first isolated port;
22: second coupling branch;
221: fourth segment;
221A: second coupling port;
222: fifth segment;
223: sixth segment;
223A: second isolated port;
23: first decoupling branch;
24: second decoupling branch;
25: adjustment branch;
H: spacing;
a1: first coupling gap;
a2: second coupling gap.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In descriptions of this application, unless otherwise specified and limited, the terms "first" and "second" are merely intended for description, and shall not be understood as an indication or implication of relative importance. Unless otherwise specified or stated, the term "a plurality of" means two or more. The terms "connect", "fasten", and the like should be all understood in a broad sense. For example, "connect" may be a fixed connection, a detachable connection, an integral connection, or an electrical connection, or may be a direct connection or an indirect connection through an intermediate medium. A person of ordinary skill in the art may understand specific meanings of the foregoing terms in this application based on specific situations.

Radiator: A radiator is an apparatus in an antenna to receive/send an electromagnetic wave and radiate the electromagnetic wave. In some cases, an "antenna" is a radiator in a narrow sense. The radiator converts guided wave energy from a transmitter into a radio wave, or converts a radio wave into guided wave energy to radiate and receive the radio wave. Modulated high-frequency current energy (or guided wave energy) generated by the transmitter is transmitted to a transmit radiator through a feeder. The radiator converts the energy into specific polarized electromagnetic wave energy, and radiates the polarized electromagnetic wave energy in a required direction. A receive radiator converts specific polarized electromagnetic wave energy from a specific direction of space into modulated high-frequency current energy, and transmits the modulated high-frequency current energy to an input end of a receiver through a feeder.

The radiator may be a conductor having a specific shape and size, for example, a wire antenna. A wire antenna is an antenna including one or more metal conductors with a diameter far less than a wavelength and a length comparable to the wavelength, and may be used as a transmit or receive antenna. Main forms of the wire antenna are: a dipole antenna, a half-wave dipole antenna, a monopole antenna, a loop antenna, an inverted F antenna (also referred to as IFA, inverted F antenna), a planar inverted F antenna (also (also referred to as PIFA, planar inverted F antenna), a slot antenna or a slotted antenna, an antenna array, and the like. For example, for dipole antennas, each dipole antenna usually includes two radiation branches, and each branch is fed by a feeding part from a feeding end of the radiation branch. For example, a slot antenna or a slotted antenna may include a single radiation branch, and two ends of the branch are grounded to form a slot or a slit.

The radiator may alternatively be a slot or a slit formed on a conductor. For example, an antenna formed by slotting on a conductor surface may also be referred to as a slot antenna or a slotted antenna. In some embodiments, a shape of the slot is a long strip. In some embodiments, a length of the slot is about half a wavelength. In some embodiments, the slot may be fed by a transmission line that spans across one side or two sides of the slot, or may be fed by a waveguide or a resonant cavity. A radio frequency electromagnetic field is excited on the slot, and an electromagnetic wave is radiated to space.

Feeder: Also referred to as a transmission line, it is a connection line between a transceiver of an antenna and a radiator of the antenna. A system that connects the radiator of the antenna to the transceiver is referred as to a feed system. Feeders are classified into wire transmission lines, coaxial cable transmission lines, waveguides, micro strips, and the like based on different frequencies. A feeding point is a connection point that is on the radiator and that is connected to the feeder.

Wavelength: Also referred to as an operating wavelength, it may be a wavelength corresponding to a center frequency of a resonance frequency or a center frequency of an operating frequency band supported by an antenna. For example, it is assumed that a center frequency of a B1 uplink frequency band (with a resonance frequency ranging from 1920 MHz to 1980 MHz) is 1955 MHz, and then the operating wavelength may be a wavelength computed by using the frequency of 1955 MHz. The "operating wavelength" is not limited to the center frequency, and may alternatively be a wavelength corresponding to a non-center frequency of the resonance frequency or the operating frequency band.

Electrical length: The electrical length may be expressed by multiplying a physical length (namely, a mechanical length or a geometric length) by a ratio of a transmission period of an electrical or electromagnetic signal in a medium to a period required by this signal to travel, in free space, for a distance that is the same as the physical length of the medium. Alternatively, the electrical length may be a ratio of a physical length (namely, a mechanical length or a geometric length) to a wavelength of a transmitted electromagnetic wave. In some embodiments of this application, a physical length of a radiator may be understood as an electrical length of the radiator ±10% of the electrical length of the radiator. In embodiments of this application, a wavelength in a wavelength mode (for example, a half-wavelength mode) of an antenna may be a wavelength of a signal radiated by the antenna.

Coupling: It may be understood as direct coupling and/or indirect coupling. The term "coupled" may be understood as being directly coupled and/or indirectly coupled. Being directly coupled may also be referred to as an "electrical connection", which may be understood as physical contact and electrical conduction between components; or may be understood as a form in which different components in a line structure are connected by using a physical line that can transmit an electrical signal, such as printed circuit board (printed circuit board, PCB) copper foil or a conducting wire. Being "indirectly coupled" may be understood as electrical conduction of two conductors through space or in a noncontact manner. In an embodiment, indirect coupling may also be referred to as capacitive coupling. For example, signal transmission is implemented by forming an equivalent capacitor through coupling in a gap between two conductive members spaced apart.

A millimeter-wave radar can not only distinguish a small-sized target, but also simultaneously identify a plurality of targets. A millimeter-wave radar may be applied as a vehicle-mounted radar to a vehicle, and certainly may also be applied to a transportation tool other than a vehicle. An antenna serves as a key component of a millimeter-wave radar system, and its performance directly affects performance of the radar system, such as a detection distance, a detection angle, an anti-interference capability, and resolution.

With the expansion of application scenarios (such as urban scenarios and high-speed scenarios) of millimeter-wave radars, millimeter-wave radars are evolving toward long-range operation, large aperture, and high angular resolution. Currently, in the field of millimeter-wave radars, the layout spacing between millimeter-wave antenna arrays is usually greater than 1.5 times the wavelength, representing a non-high-density array arrangement. In such an arrangement, a plurality of grating lobes exist in the radiation pattern of an array antenna. When a radar encounters reflection target with a large radar cross section (radar cross section, RCS), ghost target effects may occur, directly affecting overall system performance.

To reduce ghost target effects caused by high-energy grating lobes and side lobes and to achieve high angular resolution, a high-density array arrangement can be considered, in which the spacing between antenna elements is less than 0.5 wavelength with and the quantities of transmit and receive channels are increased. This arrangement solution has the following characteristics: no grating lobe, low side lobes, and high angular resolution. However, using antenna element spacing less than 0.5 wavelength introduces poor isolation, resulting in mutual interference between antenna elements and negatively affecting antenna performance.

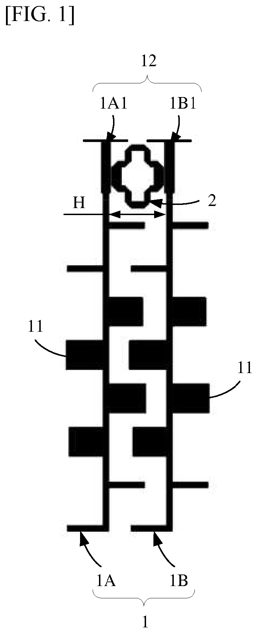

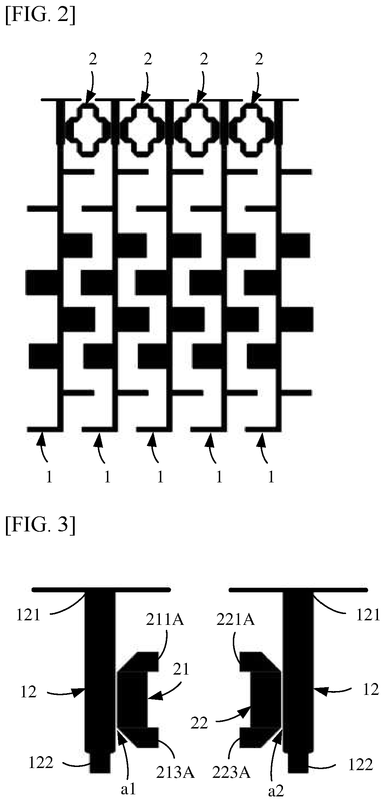

Embodiments of this application provide an antenna apparatus. The antenna apparatus may be applied to a radar system such as a millimeter-wave radar. The antenna apparatus includes at least two antenna elements 1, and the at least two antenna elements 1 may form an antenna array. For example, FIG. 1 is a diagram of a structure of an antenna apparatus according to an embodiment of this application. As shown in FIG. 1, when two antenna elements 1 are disposed, a two-element antenna array may be formed. When three antenna elements 1 are disposed, a three-element antenna array may be formed. FIG. 2 is a diagram of a structure of an antenna apparatus according to another embodiment of this application. As shown in FIG. 2, when five antenna elements 1 are disposed, a five-element antenna array may be formed. Each antenna element 1 includes a radiator 11 and a feeder 12. One end of the feeder 12 is connected to the radiator 11 to feed a radio frequency signal into the radiator 11, so that the radiator 11 radiates energy.

As shown in FIG. 1, to ensure that two adjacent antenna elements can operate independently and normally and reduce mutual interference between adjacent antenna elements 1, a preset spacing H is provided between feeders 12 of the two adjacent antenna elements 1. In an embodiment, the preset spacing H may be greater than 1.5 λ, and λ is a free-space wavelength, so that the antenna elements 1 may form a non-high-density antenna array. In an embodiment, the preset spacing H may alternatively be between 0.4 λ and 1.5 λ, so that the antenna elements 1 may form a high-density antenna array.

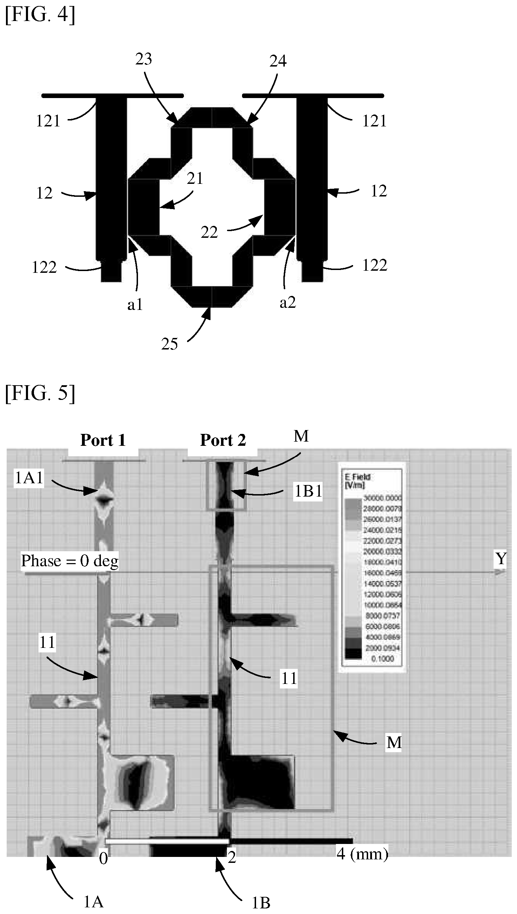

FIG. 3 is a partial view of an antenna apparatus according to an embodiment of this application. FIG. 4 is a partial view of an antenna apparatus according to another embodiment of this application. As shown in FIG. 3 and FIG. 4, a decoupling network 2 is disposed between feeders 12 of two adjacent antenna elements 1, and two ends of the decoupling network 2 are respectively indirectly coupled to the feeders 12 of the two adjacent antenna elements 1, so that currents transmitted from the feeders 12 of the two adjacent antenna elements 1 to the decoupling network 2 are opposite in phase. In an arrangement direction of the two adjacent antenna elements 1, a gap is provided between the two ends of the decoupling network 2 and the feeders 12 of the two antenna elements 1 respectively. The gap enables indirect coupling between the decoupling network 2 and the feeders 12. Coupling currents generated by the feeders 12 of the two adjacent antenna elements 1 may be guided into the decoupling network 2, and the two coupling currents from the two feeders 12 are opposite in phase, that is, transmission directions of the two coupling currents are opposite, so that the two coupling currents can cancel each other on the decoupling network 2, thereby implementing decoupling. The decoupling network 2 is a structure independent of the feeders 12, and is not in contact with the adjacent feeders 12, so that the decoupling network 2 can be independently adjusted, for example, a width and a length of the decoupling network 2 or a distance to an adjacent feeder 12 can be adjusted, so that the decoupling network 2 can match operating frequencies of the antenna elements 1, impedances between antennas, and the like, to implement decoupling between the antenna elements 1 resonating in different operating frequency bands.

Therefore, according to the antenna apparatus provided in embodiments of this application, by deploying the decoupling network 2 between the two adjacent antenna elements 1, coupling currents generated by the feeders 12 of the two adjacent antenna elements 1 may be guided into the decoupling network 2, and the two coupling currents from different feeders 12 can cancel each other on the decoupling network 2, thereby achieving an objective of decoupling. In addition, by disposing the decoupling network 2, decoupling can be implemented for the two adjacent antenna elements 1 with a spacing H of less than 0.5 λ, thereby improving isolation of a high-density array antenna.

In an embodiment, as shown in FIG. 1, description is made by using an example in which two antenna elements 1 are disposed. In addition, for ease of description, in embodiments, the two antenna elements 1 are respectively defined as a first antenna element 1A and a second antenna element 1B, a feeder 12 of the first antenna element 1A is a first feeder 1A1, and a feeder 12 of the second antenna element 1B is a second feeder 1B1. FIG. 5 is a diagram of electric field distribution of an antenna apparatus when no decoupling network 2 is disposed according to this application. A distance between feeders 12 of two antenna elements 1 shown in FIG. 5 is less than 0.5 λ, and the decoupling network 2 provided in this application is not disposed. As shown in FIG. 5, when the radiator 11 of the first antenna element 1A is fed by using the first feeder 1A1 (fed by using a port 1 in FIG. 5), a strong coupled electric field is generated on the second feeder 1B1 and the radiator 11 of the second antenna element 1B (refer to a part of the second antenna element 1B located in a wire frame M in FIG. 5). This coupled electric field adversely affects radiation performance of the antenna.

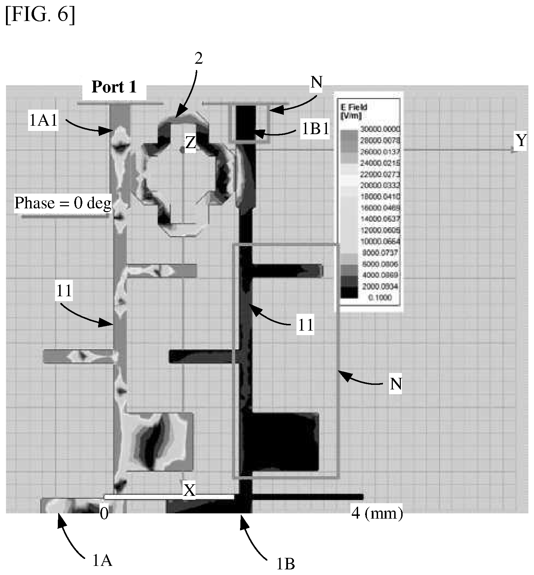

In an embodiment, FIG. 6 is a diagram of electric field distribution of an antenna apparatus when a decoupling network 2 is disposed according to this application. A structural layout and a feeding condition of antenna elements 1 shown in FIG. 6 are the same as those in FIG. 5, and a difference lies in that the decoupling network 2 is disposed between the adjacent first antenna element 1A and second antenna element 1B in FIG. 6. As shown in FIG. 6, the decoupling network 2 may guide coupling currents on the first antenna element 1A and the second antenna element 1B into the decoupling network 2, and the two coupling currents can cancel each other on the decoupling network 2, thereby implementing decoupling. Compared with a region in which a coupled electric field is strong shown in FIG. 5, a coupled electric field in a region corresponding to the second feeder 1B1 in FIG. 6 is significantly weakened (refer to a part of the second antenna element 1B located in a wire frame N in FIG. 6), and a coupled electric field on the radiator 11 of the second antenna element 1B is also well suppressed. Therefore, when the distance between the two adjacent antenna elements 1 is less than 0.5 λ, there is good isolation between the two antenna elements 1, and good radiation performance can be obtained.

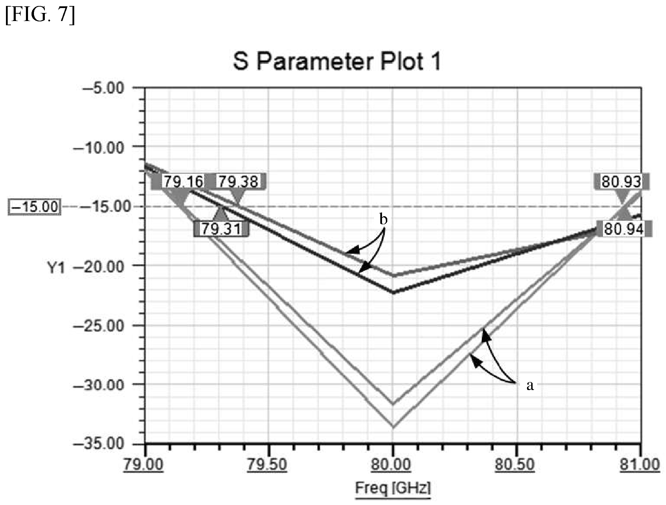

FIG. 7 is a diagram of comparison of S11 simulation curves of an antenna apparatus before and after a decoupling network 2 is disposed according to an embodiment of this application. A curve a shown in FIG. 7 is an S11 curve of the two-element antenna array (without the decoupling network 2) shown in FIG. 5, and a curve b is an S11 curve of the two-element antenna array (with the decoupling network 2) shown in FIG. 6. An abscissa represents a frequency, and an ordinate represents a return loss S11. As shown in FIG. 7, in a frequency band of 79.5 GHz to 80.5 GHz, S11 of the curve a and S11 of the curve b are both below -15 dB. In other words, S11 of the antenna apparatus can still satisfy a requirement after the decoupling network 2 is disposed.

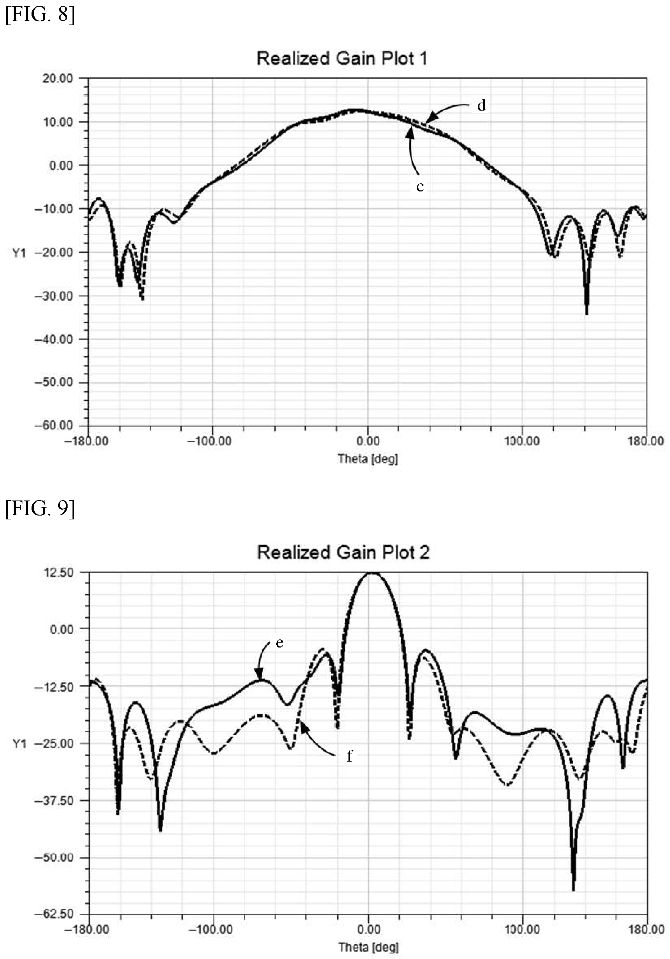

FIG. 8 is a diagram of comparison of horizontal plane patterns of an antenna apparatus before and after a decoupling network 2 is disposed according to an embodiment of this application. A curve c (a solid line) is a curve of a horizontal plane pattern of the two-element antenna array (without the decoupling network 2) shown in FIG. 5, and a curve d (a dashed line) is a curve of a horizontal plane pattern of the two-element antenna array (with the decoupling network 2) shown in FIG. 6. As shown in FIG. 8, disposing the decoupling network 2 has minor impact on a horizontal plane pattern of the antenna apparatus.

FIG. 9 is a diagram of comparison of vertical plane patterns of an antenna apparatus before and after a decoupling network 2 is disposed according to an embodiment of this application. A curve e (a solid line) is a curve of a vertical plane pattern of the two-element antenna array (without the decoupling network 2) shown in FIG. 5, and a curve f (a dashed line) is a curve of a vertical plane pattern of the two-element antenna array (with the decoupling network 2) shown in FIG. 6. As shown in FIG. 9, disposing the decoupling network 2 has minor impact on a vertical plane pattern of the antenna apparatus.

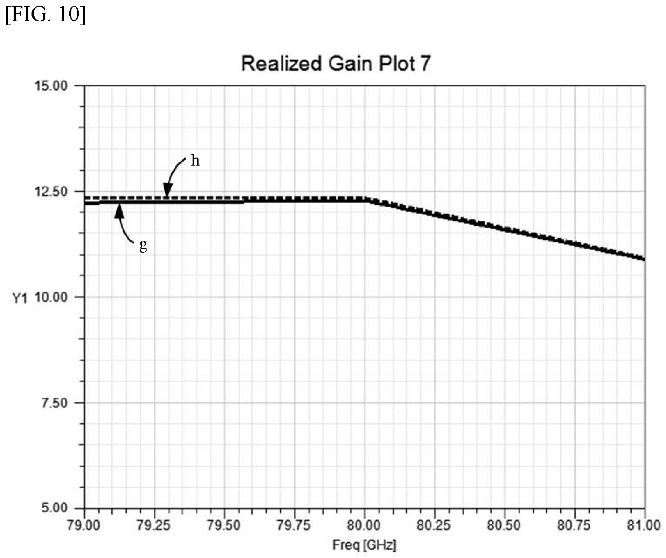

FIG. 10 is a diagram of comparison of gain curves of an antenna apparatus before and after a decoupling network 2 is disposed according to an embodiment of this application. A curve g (a solid line) is an antenna gain curve of the two-element antenna array (without the decoupling network 2) shown in FIG. 5, and a curve h (a dashed line) is an antenna gain curve of the two-element antenna array (with the decoupling network 2) shown in FIG. 6. As shown in FIG. 10, disposing the decoupling network 2 has minor impact, which may be ignored, on an antenna gain of the antenna apparatus.

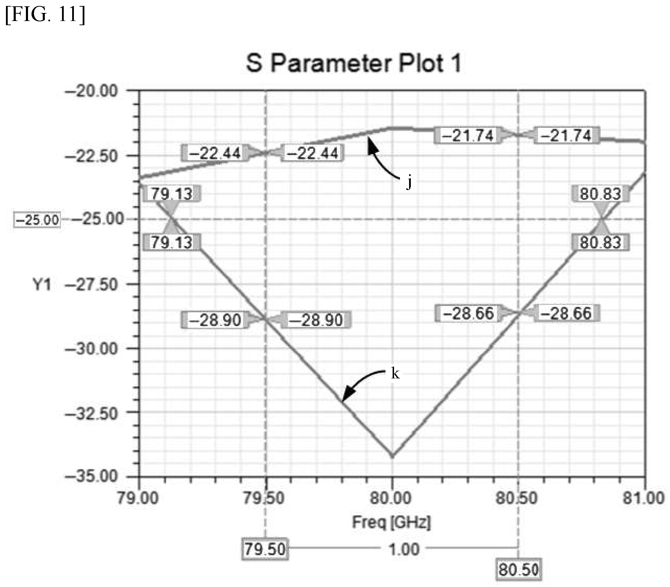

FIG. 11 is a diagram of comparison of isolation simulation curves of an antenna apparatus before and after a decoupling network 2 is disposed according to an embodiment of this application. A curve j shown in FIG. 11 is an isolation curve of the two-element antenna array (without the decoupling network 2) shown in FIG. 5, and a curve k is an isolation curve of the two-element antenna array (with the decoupling network 2) shown in FIG. 6. An abscissa represents a frequency, and an ordinate represents isolation. As shown in FIG. 11, in a frequency band of 79.5 GHz to 80.5 GHz, isolation of the curve j is less than 25 dB, and corresponding isolation at the frequency of 79.5 GHz is 22 dB; and isolation of the curve k is greater than 25 dB, and corresponding isolation at the frequency of 79.5 GHz is 28.9 dB. In other words, after the decoupling network 2 is disposed in the antenna apparatus, the isolation may be significantly improved, and isolation improvement is at least greater than or equal to 6 dB in the frequency band of 79.5 GHz to 80.5 GHz.

It can be learned that, compared with the antenna apparatus before the decoupling network 2 is disposed, after the decoupling network 2 is disposed, isolation between two adjacent antenna elements 1 is significantly improved while performance other than the isolation, such as the S11, the horizontal plane and vertical plane patterns, and the antenna gain, can still satisfy a requirement.

In an embodiment, for the five-element array antenna shown in FIG. 2, the following describes in detail the performance of the antenna in various aspects before and after the decoupling network 2 is disposed with reference to figures.

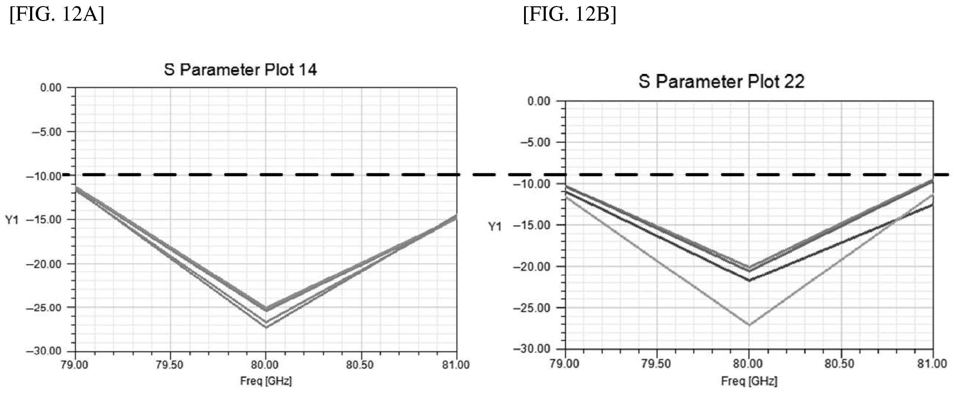

FIG. 12A and FIG. 12B are diagrams of comparison of S11 simulation curves of an antenna apparatus before and after a decoupling network 2 is disposed according to another embodiment of this application. FIG. 12A shows an S11 curve when the decoupling network 2 is not disposed in the five-element array antenna, and in the frequency band of 79.5 GHz to 80.5 GHz, S11 is less than -15 dB. FIG. 12B shows an S11 curve when the decoupling network 2 is disposed in the five-element array antenna (refer to FIG. 2), and in the frequency band of 79.5 GHz to 80.5 GHz, S11 is less than -15 dB. In other words, S11 of the antenna apparatus is almost the same before and after the decoupling network 2 is disposed, and can still satisfy a requirement.

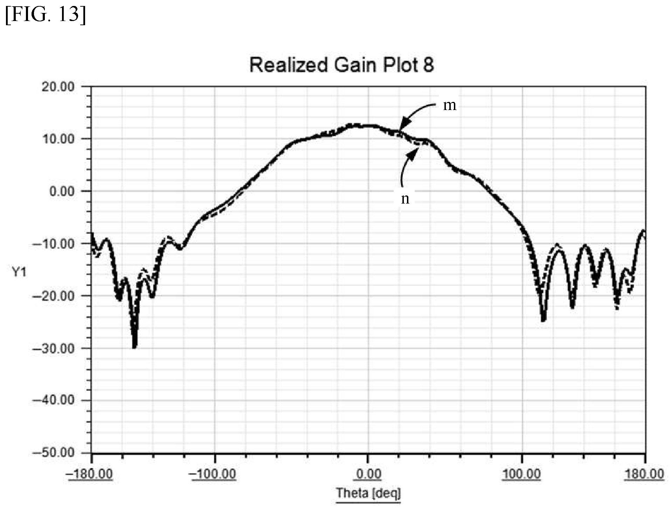

FIG. 13 is a diagram of comparison of horizontal plane patterns of an antenna apparatus before and after a decoupling network 2 is disposed according to another embodiment of this application. A curve m (a solid line) is a curve of a horizontal plane pattern of the five-element antenna array when the decoupling network 2 is not disposed, and a curve n (a dashed line) is a curve of a horizontal plane pattern of the five-element antenna array shown in FIG. 2 when the decoupling network 2 is disposed (refer to FIG. 2). As shown in FIG. 13, disposing the decoupling network 2 has minor impact on a horizontal plane pattern of the antenna apparatus.

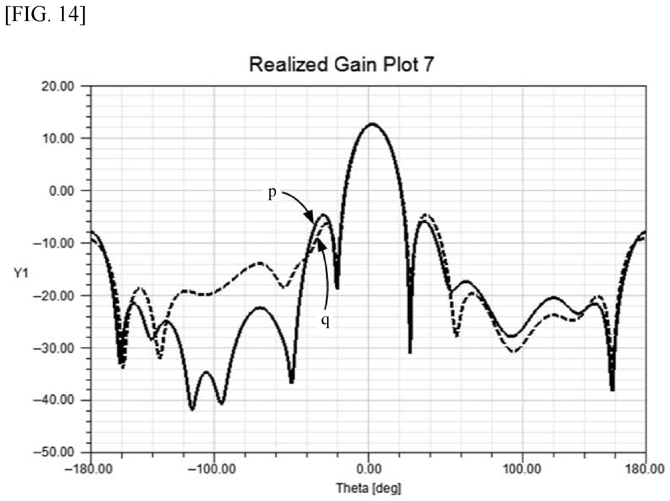

FIG. 14 is a diagram of comparison of vertical plane patterns of an antenna apparatus before and after a decoupling network 2 is disposed according to another embodiment of this application. A curve p (a solid line) is a curve of a vertical plane pattern of the five-element antenna array when the decoupling network 2 is not disposed, and a curve q (a dashed line) is a curve of a vertical plane pattern of the five-element antenna array shown in FIG. 2 when the decoupling network 2 is disposed (refer to FIG. 2). As shown in FIG. 14, disposing the decoupling network 2 has minor impact on a vertical plane pattern of the antenna apparatus.

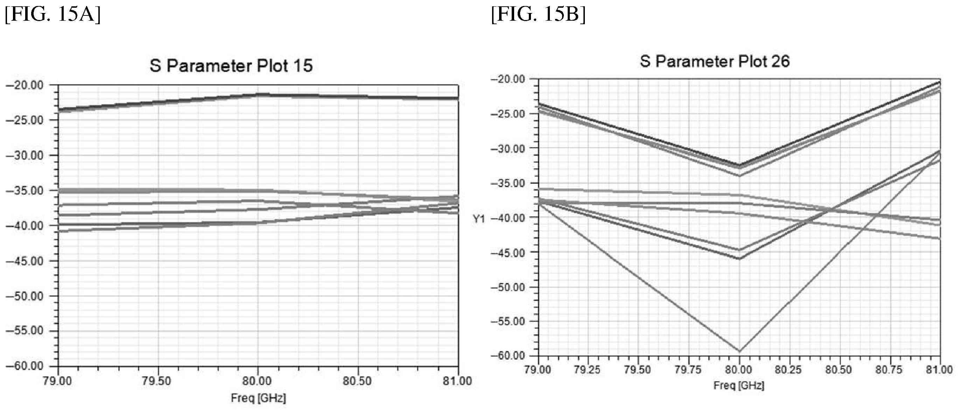

FIG. 15A and FIG. 15B are diagrams of comparison of isolation simulation curves of an antenna apparatus before and after a decoupling network 2 is disposed according to another embodiment of this application. FIG. 15A represents an isolation curve when the decoupling network 2 is not disposed in the five-element array antenna, isolation between two adjacent antenna elements 1 is partially less than 25 dB in the frequency band of 79.5 GHz to 80.5 GHz, and corresponding isolation at the frequency of 79.5 GHz is 22 dB. FIG. 15B represents an isolation curve when the decoupling network 2 is disposed in the five-element array antenna (refer to FIG. 2), where it can be learned that, isolation is greater than 25 dB in the frequency band of 79.5 GHz to 80.5 GHz, and corresponding isolation at the frequency of 79.5 GHz is 28 dB. In other words, after the decoupling network 2 is disposed in the antenna apparatus, the isolation may be significantly improved, and isolation improvement is at least greater than or equal to 6 dB in the frequency band of 79.5 GHz to 80.5 GHz.

It can be learned that, compared with the antenna apparatus before the decoupling network 2 is disposed, after the decoupling network 2 is disposed, isolation between two adjacent antenna elements 1 is significantly improved while performance other than the isolation, such as the S11, the horizontal plane and vertical plane patterns, and the antenna gain, can still satisfy a requirement.

Certainly, in some other embodiments, for a multi-element array antenna including another quantity of antenna elements, the isolation between two adjacent antenna elements 1 can be significantly improved by disposing the decoupling network 2. Details are not described herein.

In an embodiment, the feeder 12 and the decoupling network 2 may be disposed on a dielectric board, and the dielectric board may be a printed circuit board (printed circuit board, PCB). In an embodiment, the feeder 12, the radiator 11, and the decoupling network 2 are etched on a circuit board. In an embodiment, the feeder 12, the radiator 11, and the decoupling network 2 may alternatively be metal sheets, for example, copper sheets. Such metal sheets may be disposed on a dielectric material.

In an embodiment, as shown in FIG. 3, the decoupling network 2 includes a first coupling branch 21 and a second coupling branch 22, a first coupling gap a1 is provided between the first coupling branch 21 and one adjacent feeder 12, and the first coupling branch 21 includes a first coupling port 211A. A second coupling gap a2 is provided between the second coupling branch 22 and the other adjacent feeder 12, and the second coupling branch 22 includes a second coupling port 221A. The first coupling port 211A is coupled to the second coupling port 221A, and currents between the first coupling port 211A and the second coupling port 221A are opposite in phase. A coupling current generated by the feeder 12 neighboring the first coupling branch 21 may be coupled to the first coupling branch 21, and can be transmitted to the first coupling port 211A. A coupling current generated by the feeder 12 neighboring the second coupling branch 22 may be coupled to the second coupling branch 22, and can be transmitted to the second coupling port 221A. The current on the first coupling port 211A and the current on the second coupling port 221A are in opposite directions. Therefore, when the current on the first coupling port 211A and the current on the second coupling port 221A are coupled to each other, they can cancel each other to implement decoupling.

In an embodiment, as shown in FIG. 3, the feeder 12 includes an input port 121 and an output port 122. The feeder 12 is connected to a radio frequency front-end through the input port 121. The radio frequency front-end may include components such as a power amplifier and a filter. The feeder 12 is coupled to the radiator 11 through the output port 122. The first coupling port 211A is disposed at one end of the first coupling branch 21 adjacent to the input port 121, and/or the second coupling port 221A is disposed at one end of the second coupling branch 22 adjacent to the input port 121. For ease of description, in this embodiment, description is made by using an example in which the first coupling port 211A is disposed at one end of the first coupling branch 21 adjacent to the input port 121, and the second coupling port 221A is disposed at one end of the second coupling branch 22 adjacent to the input port 121. The radio frequency signal may be input by the radio frequency front-end to the feeder 12 through the input port 121 of the feeder 12, and can be fed into the radiator 11 through the output port 122. When a distance between the two adjacent antenna elements 1 is short, for example, when a distance between the feeders 12 of the two adjacent antenna elements 1 is less than 0.5 λ, if no decoupling network 2 is disposed, a coupled electric field is generated on the feeders 12. Therefore, the decoupling network 2 may be disposed at a position corresponding to the feeders 12 and can be indirectly coupled to the feeders 12, to guide coupling currents generated by the feeders 12 to the decoupling network 2, thereby implementing an effect of decoupling between the feeders 12. A strong coupled electric field is easily generated at a position near the input port 121 on the feeder 12, and the coupling currents on the decoupling network 2 are mainly to implement an effect of current cancellation at the first coupling port 211A and the second coupling port 221A. Therefore, the first coupling port 211A and the second coupling port 221A are closer to the input ports 121 of the feeders 12, so that the coupling currents near the input ports 121 can quickly and efficiently implement decoupling through the decoupling network 2.

In an embodiment, as shown in FIG. 3, the first coupling gap a1 and/or the second coupling gap a2 are/is greater than or equal to 0.01 mm. For example, the gap may be between 0.05 mm and 0.15 mm. Keeping the gap within the foregoing range can facilitate manufacturing and ensure an effect of coupling between the decoupling network 2 and the feeders 12, thereby ensuring a decoupling effect.

In an embodiment, as shown in FIG. 4, the decoupling network 2 further includes a first decoupling branch 24 and a second decoupling branch 24. A first end of the first decoupling branch 24 is electrically connected to the first coupling port 211A, a first end of the second decoupling branch 24 is electrically connected to the second coupling port 221A, and a second end of the first decoupling branch 24 is electrically connected to a second end of the second decoupling branch 24. The first decoupling branch 24 and the second decoupling branch 24 may implement a direct electrical connection between the first coupling port 211A and the second coupling port 221A, to help implement an effect of mutual cancellation of coupling currents on the decoupling branches. In addition, impedance of the two feeders 12 may be matched by configuring the first decoupling branch 24 and the second decoupling branch 24, so that a decoupling function of the two feeders 12 satisfies an operating frequency band of the antenna elements 1.

In an embodiment, to achieve an effect of current coupling between the decoupling network 2 and the feeders 12 and generate a current coupling path on the decoupling network 2, an electrical length between the first end of the first decoupling branch 24 and the second end of the first decoupling branch 24 is 0.5 Nλ, and an electrical length between the first end of the second decoupling branch 24 and the second end of the second decoupling branch 24 is 0.5 Nλ, where N is a positive odd number, for example, N = 1, 3, 5, 7, 9..., and λ is a wavelength in the medium.

In an embodiment, as shown in FIG. 3, one end of the first coupling branch 21 away from the first coupling port 211A further includes a first isolated port 213A, one end of the second coupling branch 22 away from the second coupling port 221A further includes a second isolated port 223A, and the first isolated port 213A is coupled to the second isolated port 223A. Most of currents coupled by the feeders 12 to the decoupling network 2 undergo phase cancellation through the first decoupling branch 24 and the second decoupling branch 24, and a minor portion of the currents or no current is coupled between the first isolated port 213A and the second isolated port 223A. The first isolated port 213A and the second isolated port 223A may play a function of impedance matching between the decoupling network 2 and the feeders 12, so that the coupling currents generated by the feeders 12 can be coupled to the decoupling network 2, thereby implementing the decoupling effect.

In an embodiment, as shown in FIG. 4, the decoupling network 2 further includes an adjustment branch 25, and two ends of the adjustment branch 25 are electrically connected to the first isolated port 213A and the second isolated port 223A respectively. The adjustment branch 25 may implement a direct electrical connection between the first isolated port 213A and the second isolated port 223A, and impedance adjustment can be implemented by configuring a proper adjustment branch 25. Impedance adjustment may be implemented by adjusting a width, a shape, and the like of the adjustment branch 25, to implement impedance matching between the decoupling network 2 and the feeders 12 on different operating frequency bands. Certainly, widths or shapes of the first coupling branch 21, the second coupling branch 22, the first decoupling branch 24, and the second decoupling branch 24 may be adaptively adjusted, to cooperate in adjusting the impedance of the decoupling network 2.

In an embodiment, to enable the decoupling network 2 between any two adjacent feeders 12 to have a decoupling effect and generate a current coupling path on the decoupling network 2, an electrical length between the first isolated port 213A and the first coupling port 211A is 0.25 Nλ, and an electrical length between the second isolated port 223A and the second coupling port 221A is 0.25 Nλ, where N is the positive odd number, for example, N = 1, 3, 5, 7, 9.., and λ is the wavelength in the medium.

In an embodiment, the decoupling network 2 is of an integrally-formed structure, that is, the first coupling branch 21, the second coupling branch 22, the first decoupling branch 24, the second decoupling branch 24, and the adjustment branch 25 are all integrally formed in a process of preparing the decoupling network 2, so that the decoupling network 2 forms an integrated structure, to facilitate manufacturing and avoid that a joint gap is generated at a joint of the branches to affect distribution of currents, thereby ensuring the decoupling effect.

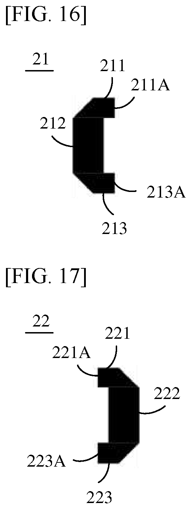

In an embodiment, FIG. 16 is a diagram of a structure of a first coupling branch 21 according to an embodiment of this application. As shown in FIG. 16, the first coupling branch 21 includes a first segment 211, a second segment 212, and a third segment 213. Two ends of the second segment 212 are respectively connected to the first segment 211 and the third segment 213. The first segment 211 and the third segment 213 bend toward one side of the second segment 212 away from the adjacent feeder 12. One end of the first segment 211 away from the second segment 212 forms the first coupling port 211A. One end of the third segment 213 away from the second segment 212 forms the first isolated port 213A. The first segment 211, the second segment 212, and the third segment 213 may form a C-shaped structure, and the second segment 212 may be longer, to help guide a coupling current generated by the adjacent feeder 12 into the first coupling branch 21. The first segment 211 protrudes toward one side of the second segment 212, to help guide the coupling current into the first coupling port 211A to cancel a reverse current at the second coupling port 221A, thereby implementing decoupling. The third segment 213 may cooperate with the second coupling branch 22 to implement impedance matching.

Similarly, in an embodiment, FIG. 17 is a diagram of a structure of a second coupling branch 22 according to an embodiment of this application. As shown in FIG. 17, the second coupling branch 22 includes a fourth segment 221, a fifth segment 222, and a sixth segment 223. Two ends of the fifth segment 222 are respectively connected to the fourth segment 221 and the sixth segment 223. The fourth segment 221 and the sixth segment 223 bend toward one side of the fifth segment 222 away from the adjacent feeder 12. One end of the fourth segment 221 away from the fifth segment 222 forms the second coupling port 221A. One end of the sixth segment 223 away from the fifth segment 222 forms the second isolated port 223A. The fourth segment 221, the fifth segment 222, and the sixth segment 223 may also form a C-shaped structure, and the fifth segment 222 may be longer, to help guide a coupling current generated by the adjacent feeder 12 into the second coupling branch 22. A length of the fifth segment 222 needs to satisfy 0.25 Nλ, where N is the positive odd number, for example, N = 1, 3, 5, 7, 9..., and λ is the wavelength in the medium. The fourth segment 221 protrudes toward one side of the fifth segment 222, to help guide the coupling current into the second coupling port 221A to cancel a reverse current at the first coupling port 211A, thereby implementing decoupling. The sixth segment 223 may cooperate with the third segment 213 to implement impedance matching.

The first coupling branch 21 and the second coupling branch 22 are both of an integrated structure. In embodiments, for ease of describing various parts of the first coupling branch 21 and the second coupling branch 22, the first coupling branch 21 is divided into the first segment 211, the second segment 212, and the third segment 213; and the second coupling branch 22 is divided into the fourth segment 221, the fifth segment 222, and the sixth segment 223. However, there is no clear boundary between the first segment 211, the second segment 212 and the third segment 213, and there is no clear boundary between the fourth segment 221, the fifth segment 222 and the sixth segment 223.

The foregoing descriptions are merely preferred embodiments of this application, and are not intended to limit this application. For a person skilled in the art, this application may have various modifications and variations. Any modification, equivalent replacement, improvement, or the like made without departing from the spirit and principle of this application shall fall within the protection scope of this application.

## Claims

1. An antenna apparatus, comprising:
at least two antenna elements, wherein each antenna element comprises a radiator and a feeder, one end of the feeder is connected to the radiator to feed a radio frequency signal into the radiator, and a preset spacing is provided between feeders of two adjacent antenna elements; and
a decoupling network, disposed between the feeders of the two adjacent antenna elements, wherein two ends of the decoupling network are respectively indirectly coupled to the feeders of the two adjacent antenna elements, so that currents transmitted from the feeders of the two adjacent antenna elements to the decoupling network are opposite in phase.

2. The antenna apparatus according to claim 1, wherein the decoupling network comprises a first coupling branch and a second coupling branch, a first coupling gap is provided between the first coupling branch and one adjacent feeder, and the first coupling branch comprises a first coupling port;
a second coupling gap is provided between the second coupling branch and the other adjacent feeder, and the second coupling branch comprises a second coupling port; and
the first coupling port is coupled to the second coupling port, and currents between the first coupling port and the second coupling port are opposite in phase.

3. The antenna apparatus according to claim 2, wherein the feeder comprises an input port and an output port, the feeder is connected to a radio frequency front-end through the input port, and the feeder is coupled to the radiator through the output port; and
the first coupling port is disposed at one end of the first coupling branch adjacent to the input port, and/or the second coupling port is disposed at one end of the second coupling branch adjacent to the input port.

4. The antenna apparatus according to claim 2, wherein the first coupling gap and/or the second coupling gap are/is greater than or equal to 0.01 mm.

5. The antenna apparatus according to any one of claims 2 to 4, wherein the decoupling network further comprises a first decoupling branch and a second decoupling branch, a first end of the first decoupling branch is electrically connected to the first coupling port, a first end of the second decoupling branch is electrically connected to the second coupling port, and a second end of the first decoupling branch is electrically connected to a second end of the second decoupling branch.

6. The antenna apparatus according to claim 5, wherein an electrical length between the first end of the first decoupling branch and the second end of the first decoupling branch is 0.5 Nλ, an electrical length between the first end of the second decoupling branch and the second end of the second decoupling branch is 0.5 Nλ, N is a positive odd number, and λ is a wavelength in a medium.

7. The antenna apparatus according to any one of claims 2 to 6, wherein one end of the first coupling branch away from the first coupling port further comprises a first isolated port, one end of the second coupling branch away from the second coupling port further comprises a second isolated port, and the first isolated port is coupled to the second isolated port.

8. The antenna apparatus according to claim 7, wherein the decoupling network further comprises an adjustment branch, and two ends of the adjustment branch are electrically connected to the first isolated port and the second isolated port respectively.

9. The antenna apparatus according to claim 7 or 8, wherein an electrical length between the first isolated port and the first coupling port is 0.25 Nλ, an electrical length between the second isolated port and the second coupling port is 0.25 Nλ, N is the positive odd number, and λ is the wavelength in the medium.

10. The antenna apparatus according to any one of claims 7 to 9, wherein the first coupling branch comprises a first segment, a second segment, and a third segment, two ends of the second segment are respectively connected to the first segment and the third segment, the first segment and the third segment bend toward one side of the second segment away from the adjacent feeder, one end of the first segment away from the second segment forms the first coupling port, and one end of the third segment away from the second segment forms the first isolated port.

11. The antenna apparatus according to any one of claims 7 to 10, wherein the second coupling branch comprises a fourth segment, a fifth segment, and a sixth segment, two ends of the fifth segment are respectively connected to the fourth segment and the sixth segment, the fourth segment and the sixth segment bend toward one side of the fifth segment away from the adjacent feeder, one end of the fourth segment away from the fifth segment forms the second coupling port, and one end of the sixth segment away from the fifth segment forms the second isolated port.

12. The antenna apparatus according to any one of claims 1 to 11, wherein a spacing between the feeders of the two adjacent antenna elements is greater than or equal to 0.4 λ, and λ is a free-space wavelength.

13. The antenna apparatus according to any one of claims 1 to 12, wherein the decoupling network is integrally formed.

14. A radar, comprising the antenna apparatus according to any one of claims 1 to 13.
